# EUROPEAN PATENT APPLICATION

(11) **EP 3 301 859 A1**
(43) Date of publication of application: **04.04.2018**
(21) Application number: 15899458.2
(22) Date of filing: 05.04.2016
(51) Int. Cl.: H04L 12/46, H04L 29/08, H04L 12/701

(54) **SDN-BASED QOS-SUPPORTED COMMUNICATIONS TUNNEL ESTABLISHMENT METHOD AND SYSTEM**

(30) Priority: 28.07.2015 CN 201510451942
(71) Applicant: Phicomm (Shanghai) Co., Ltd., Shanghai 201616 (CN)
(72) Inventor: ZHAI, Yue, Shanghai 200050 (CN)
(74) Representative: Sun, Yiming
(86) International application number: PCT/CN2015/095160
(87) International publication number: WO 2017/016106

(57) **Abstract**

The present invention provides an SDN-based QoS-supported communication tunnel establishment method and system used in a communication network comprising SDN switches and an SDN controller, the method comprising: an SDN switch reports a target MAC address and an SDN flow mismatching a flow table to an SDN controller; the SDN controller obtains a forwarding path of the SDN flow; the SDN controller generates a tunnel ID mapping table and a queue ID mapping table according to the forwarding path and 5-tuple information of the SDN flow, and generates a corresponding flow table, a priority queue being specified in the tunnel ID; the SDN controller dispatches the flow table to the SDN switches; and the SDN switch obtains the output queue and the output port. The present invention is based on an SDN architecture, and the communication tunnel establishment is accomplished by the SDN controller. In addition, based on a DSCP field in an IP header of the SDN flow, the communication tunnel is established, the priority queue is specified, and end-to-end QoS service is provided.

## Description

### TECHNICAL FIELD

The present invention relates to communication technologies, and in particular, to an SDN-based QoS-supported communication tunnel establishment method and system.

### BACKGROUND

Generic routing encapsulation (GRE) provides a mechanism for encapsulating a protocol message into another protocol message, so that the message can be transmitted across different networks. However, the GRE mechanism is simple and unable to guarantee the message to be transmitted to its destination correctly, and does not provide QoS (Quality of Service) characteristics. Conventionally, GRE is used for encapsulating a data packet of a certain network layer protocol so that the encapsulated data packet can be transmitted in another network layer protocol. In order to be transmitted in a GRE tunnel, the message must undergo two processes: encapsulation and de-encapsulation.

The conventional GRE features a simple mechanism, light load for CPUs on both side of the tunnel and does not provide QoS function. The establishment of a GRE tunnel is rather complex and requires the presence of a route forwarded by the tunnel on both the source router and the target router. The tunnel route may be configured as either a static route or a dynamic route in order to forward the GRE-encapsulated message correctly.

A conventional GRE tunnel is established in a distributed manner in which tunnel routes are required to be configured on the forwarding devices in order to forward the GRE-encapsulated message correctly, which causes a slow convergence. The conventional GRE features a simple mechanism, light load for CPUs on both side of the tunnel and does not provide QoS function.

### SUMMARY

Embodiments of the present invention provide an SDN-based QoS-supported communication tunnel establishment method and system to solve the problem that the end-to-end QoS services are absence in communication tunnel establishment in the prior art.

An SDN-based QoS-supported communication tunnel establishment method, used in a communication network comprising SDN switches and an SDN controller, is provided, including:
reporting, by an SDN switch, a designated MAC address and an SDN flow mismatching a flow table to an SDN controller;
obtaining, by the SDN controller, a forwarding path of the SDN flow according to the MAC address, a flow feature code of the SDN flow and a link layer discovery protocol;
generating, by the SDN controller, a tunnel ID mapping table indicating a mapping of the 5-tuple information to a tunnel ID and a queue ID mapping table indicating a mapping of the tunnel ID to an output queue and an output port, and a corresponding flow table according to the forwarding path and 5-tuple information of the SDN flow, wherein a priority queue is specified in the tunnel ID;
dispatching, by the SDN controller, the flow table to the SDN switch so that the SDN flow is forwarded according to the flow table.
obtaining, by the SDN switch, the output queue and the output port according to the tunnel ID.

As a preferred embodiment of the present invention, the SDN-based QoS-supported communication tunnel establishment method further includes:
expanding an SDN flow 5-tuple information field and a tunnel ID field used to query tunnel ID mapping table and the queue ID mapping table in an OF flow table.

As a preferred embodiment of the present invention, the 5-tuple information of the SDN flow includes: a target MAC address, a target IP address, a source MAC address, a source IP address and a DSCP value.

As a preferred embodiment of the present invention, the tunnel ID includes a DSCP value, configured to identify the priority levels corresponding to the SDN flow;
an ID number, dynamically assigned according to the 5-tuple information of the SDN flow.

As a preferred embodiment of the present invention, the SDN switch obtains the output queue and the output port according to the tunnel ID, more precisely, determining, by the SDN switch, whether the received SDN flow is in tunnel message format, if so, matching the flow table according to the tunnel ID to obtain the output queue and the output port; if not, matching the flow table according to the 5-tuple information and marking with the tunnel ID to obtain the output queue and the output port.

An SDN-based QoS-supported communication tunnel establishment system, used in a communication network comprising SDN switches and an SDN controller, is provided, including:
the SDN switches, including:
   a reporting module, configured to report a designated MAC address and an SDN flow mismatching a flow table to an SDN controller;
   the SDN controller, connected to the SDN switches, including:
      a forwarding-path obtaining module, connected to the reporting module, configured to obtain a forwarding path of the SDN flow according to the MAC address, a flow feature code of the SDN flow and a link layer discovery protocol;
      a tunnel information generating module, connected to the forwarding-path obtaining module, configured to generate a tunnel ID mapping table indicating a mapping of the 5-tuple information to a tunnel ID and a queue ID mapping table indicating a mapping of the tunnel ID to an output queue and an output port, and a corresponding flow table according to the forwarding path of the SDN flow and 5-tuple information of the SDN flow, wherein a priority queue is specified in the tunnel ID;
      a flow table dispatching module, connected to the tunnel information generating module, configured to dispatch the flow table to the SDN switches, so that the SDN flow is forwarded according to the flow table.

As a preferred embodiment of the present invention, the SDN-based QoS-supported communication tunnel establishment system further includes an OF flow table expanding module, configured to expand an SDN flow 5-tuple information field and a tunnel ID field used to query tunnel ID mapping table and the queue ID mapping table in an OF flow table.

As a preferred embodiment of the present invention, the 5-tuple information of the SDN flow includes a target MAC address, a target IP address, a source MAC address, a source IP address and a DSCP value.

As a preferred embodiment of the present invention, the tunnel ID includes a DSCP value, configured to identify the priority levels corresponding to the SDN flow; an ID number, dynamically assigned according to the 5-tuple information of the SDN flow.

As a preferred embodiment of the present invention, the SDN switches further includes: an information obtaining module, connected to the flow table dispatching module, configured to obtain the output queue and the output port according to the tunnel ID; a determining module, connected to the flow table dispatching module and the information obtaining module, configured to determine whether the received SDN flow is in tunnel message, if so, the information obtaining module matches the flow table according to the tunnel ID to obtain the output queue and the output port; and if not, the information obtaining module matches the flow table according to the 5-tuple information and marks it with the tunnel ID to obtain the output queue and the output port.

As mentioned above, the SDN-based QoS-supported communication tunnel establishment method and system of the present invention show the following benefits:
The invention is based on an SDN architecture, and the communication tunnel establishment is accomplished by the SDN controller. In addition, based on a DSCP field in an IP header of the SDN flow, the communication tunnel is established, the priority queue is specified, and end-to-end QoS service is provided. The present invention possesses high versatility of use and high utility.

### BRIEF DESCRIPTION OF THE DRAWINGS

Fig. 1 shows a flowchart schematically illustrating an SDN-based QoS-supported communication tunnel establishment method of the present invention.
Fig. 2 shows a schematic illustrating control of the SDN-based QoS-supported communication tunnel establishment method of the present invention.
Fig. 3 shows a schematic illustrating implementation of the SDN-based QoS-supported communication tunnel establishment method of the present invention.
Fig. 4 shows a flowchart schematically illustrating processing performed by an SDN controller in the SDN-based QoS-supported communication tunnel establishment method of the present invention.
Fig. 5 shows a flowchart schematically illustrating processing performed by an SDN switch in the SDN-based QoS-supported communication tunnel establishment method of the present invention.
Fig. 6 shows a schematic illustrating the establishment of a simulation environment of the SDN-based QoS-supported communication tunnel establishment method of the present invention.
Fig. 7 shows a schematic illustrating a structure of an SDN-based QoS-supported communication tunnel establishment system of the present invention.
Fig. 8 shows a schematic illustrating a preferred structure of the SDN-based QoS-supported communication tunnel establishment system of the present invention.

### Description of Reference Numerals of Elements

- 1: SDN-based QoS-supported communication tunnel establishment system
- 11: SDN switch
- 111: Reporting module
- 112: Information obtaining module
- 113: Determining module
- 12: SDN controller
- 121: Forwarding-path obtaining module
- 122: Tunnel information generating module
- 123: Flow table dispatching module
- 13: OF flow table expanding module
- S11-S14: Steps

### DETAILED DESCRIPTION

The present invention will be described below by means of a specific embodiment. Other advantages and effects of the invention will be readily understood by those skilled in the art from the disclosure herein. The present invention may also be implemented or utilized as other different specific embodiments, and various modification or changes may be made to the details disclosed herein from different views and for different applications without departing from the spirit of the invention.

It is an object of the present invention to provide an SDN-based QoS-supported communication tunnel establishment method and system to
solve the problem that the end-to-end QoS services are absence in communication tunnel establishment in the prior art. The principles and embodiments of the SDN-based QoS-supported communication tunnel establishment method and system of the present invention will be described in detail below so that those skilled in the art can understand the SDN-based QoS-supported communication tunnel establishment method and system of the invention without exerting creative efforts.

The present embodiment is a tunnel technique based on SDN and QoS supported, in which an SDN controller establishes a tunnel according to a forwarding path of an SDN flow and selects a fit end-to-end QoS queue to perform data forwarding according to a DSCP field in an IP header of the SDN flow.

Since the tunnel establishment is controlled by the controller and accomplished by the flow table, so it is high efficiency and simple.

An QoS supported SDN network can identify the data packet category generated in application and perform special process on special data packet. In order to provide more refined priority level options, an SDN switch must allocate 64 queues on each port.

Herein, "SDN" stands for Software Defined Network, which is an innovative, novel network architecture for Emulex networks and also an implementation of network virtualization.

The core technique, OpenFlow, performs flexible control on network flow via separating the network device from data, so that the network as a tunnel becomes more intelligent.

"QoS" stands for Quality of Service and means that a network can provide a better service for specified network communication by different basic technologies, which is a network security mechanism to solve the network latency, congestion and other issues.

Under normal circumstances, QoS is not needed if a network is only used for specific application systems without time limitations, such as Web applications or E-mail settings. However, it is necessary for critical applications and multimedia applications. When a network is overloaded or congested, QoS can ensure that critical traffic is not delayed or discarded and guarantee the efficient operation of the network.

DSCP stands for Differentiated Services Code Point. In December 1998, the IETF published a QoS classification standard for Diff-Serv (Differentiated Service). It utilizes 6 used bits and 2 unused bits in a ToS (Type of service) identification byte in each packet's IP header to encode a value in order to identify priority levels.

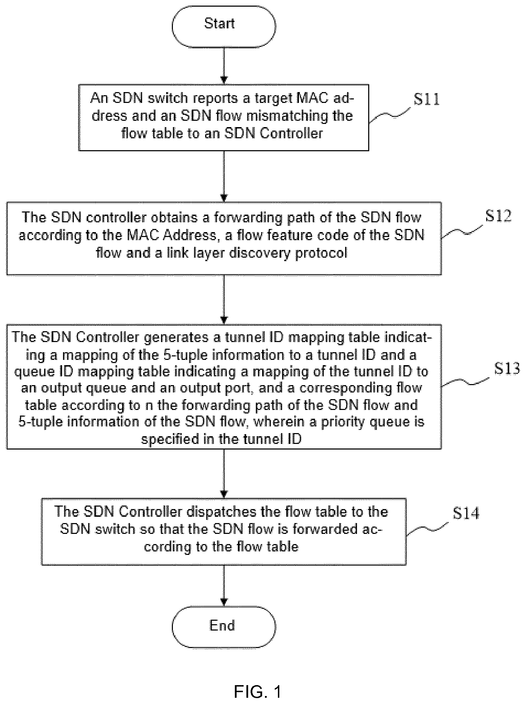

Specifically, as shown in Fig. 1, the SDN-based QoS-supported communication tunnel establishment method provided in this embodiment is used in a communication network comprising SDN switches and an SDN controller. The SDN-based QoS-supported communication tunnel establishment method includes the steps detailed below.

In step S11, an SDN switch reports a designated MAC address and an SDN flow mismatching a flow table to the SDN controller.

In step S12, the SDN controller obtains a forwarding path of the SDN flow according to the MAC address, a flow feature code of the SDN flow and a link layer discovery protocol.

In step S13, the SDN controller generates a tunnel ID mapping table indicating a mapping of the 5-tuple information to a tunnel ID and a queue ID mapping table indicating a mapping of the tunnel ID to an output queue and an output port, and a corresponding flow table according to the forwarding path and 5-tuple information of the SDN flow, wherein a priority queue is specified in the tunnel ID.

In step S14, the SDN controller dispatches the flow table to the SDN switch so that the SDN flow is forwarded according to the flow table.

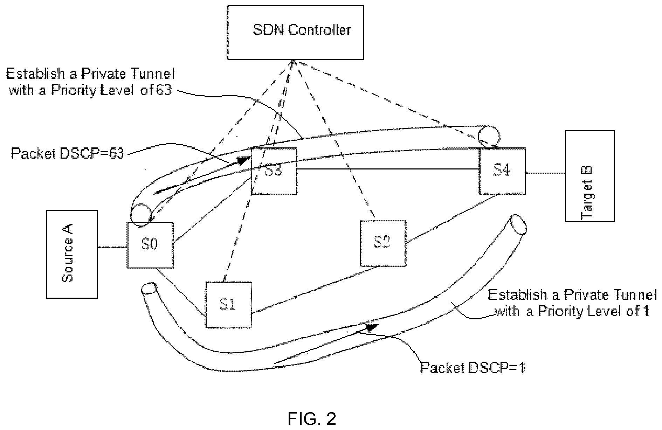

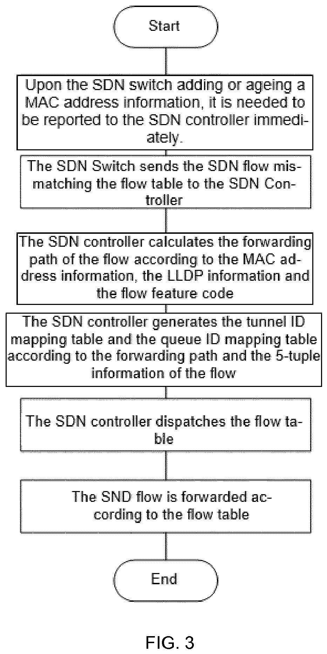

As shown in Figs. 2 and 3, steps S11 to S14 are described in detail below.

The SDN-based QoS-supported communication tunnel establishment method in this embodiment is based on an SDN architecture, and the tunnel establishment is accomplished by the SDN controller with a fast convergence speed. As shown in Fig. 2, the SDN-based QoS-supported communication tunnel establishment method in the present embodiment establishes a tunnel according to a DSCP field in an IP header of the SDN flow, indicates a priority queue and provides end-to-end QoS service. In Fig. 2, a source A transmits data and establishes a private tunnel with a priority level of 63, i.e., packet DSCP=63, and a private tunnel with a priority level of 1, i.e., packet DSCP = 1, and a target B receives the data, wherein S0-S4 are SDN switches and the SDN controller controls data forwarding.

In the SDN-based QoS-supported communication tunnel establishment method in the present embodiment, it is needed to expand the OF flow table instruction set to match the 5-tuple information of the SDN flow (target MAC address, target IP address, source MAC address, source IP address and DSCP value), mark it with different tunnel headers at border switches and perform forwarding via specified tunnel and QoS queue.

In the SDN-based QoS-supported communication tunnel establishment method in the present embodiment, it is assumed that the control level of border switches and interior switches are all elevated to the SDN controller and the border switches and interior switches only reserve the data and downgrade to forwarding nodes.

The definition of the private 32-bit tunnel ID implicitly specifies the priority queue. The private tunnel ID mapping table indicates a mapping of the 5-tuple information to the tunnel ID. The private queue ID mapping table indicates a mapping of the tunnel ID to the output queue and the output port. The border switch marks the tunnel header according to the private tunnel ID mapping table and queries the private queue ID mapping table to obtain the output queue and the output port for forwarding. The interior switches only query the private queue ID mapping table to obtain the output queue and the output port for forwarding.

In step S11, an SDN switch reports a designated MAC address and an SDN flow mismatching the flow table to the SDN controller. Specifically, in the present embodiment, upon the SDN switch adding or ageing a MAC address information, it is needed to be reported to the SDN controller immediately. In addition, the SDN switch sends the SDN flow mismatching the flow table to the SDN controller.

Step S12 is then performed. In step S12, the SDN controller obtains a forwarding path of the SDN flow according to the MAC address, a flow feature code of the SDN flow and a link layer discovery protocol. That is, the SDN controller calculates the forwarding path according to the MAC address information, the LLDP (Link Layer Discovery Protocol) information and the flow feature code.

Wherein, the LLDP (Link Layer Discovery Protocol) provides a standard link layer discovery mode, which organizes the main capabilities, management address, device identifier, interface identifier and other information of a local device into different TLVs (type-length-values) encapsulated in LLDPDUs (Link Layer Discovery Protocol Data Units) and to be published to the directly connected neighbors. After receiving the information, the neighbors store it in a standard MIB (Management Information Base) format for network management system query and link communication condition determination. The link layer discovery protocol (LLDP) is a vendor-independent Layer 2 protocol that allows a network device to broadcast its device identifier and capabilities over a local subnet.

In step S13, the SDN controller generates a tunnel ID mapping table indicative of a mapping of the 5-tuple information to the tunnel ID and a queue ID mapping table indicative of a mapping of the tunnel ID to an output queue and an output port according to the forwarding path of the SDN flow and the 5-tuple information of the SDN flow, and a corresponding flow table, wherein the tunnel ID specifies a priority queue. The SDN controller generates the tunnel ID mapping table and the queue ID mapping table according to the forwarding path and the 5-tuple information of the SDN flow.

In step S14, the SDN controller dispatches the flow table to the SDN switch so that the SDN flow is forwarded according to the flow table. That is, the SDN controller dispatches the flow table according to the calculation results. The SDN flow is forwarded according to the flow table.

In addition, in the present embodiment, the SDN-based QoS-supported communication tunnel establishment method further includes: expanding an SDN flow 5-tuple information field and a tunnel ID field used to query tunnel ID mapping table and the queue ID mapping table in an OF flow table.

The OF flow table expanding instruction set is used for querying the tunnel ID mapping table and the queue ID mapping table. The SDN controller and switches should support the expansion of the OF flow table instruction set. The expansion of the OF flow table is defined as shown in Table 1.

**Table 1**

| Expansion of OF Flow Table | | |
|---|---|---|
| Match Field | Action Field | Description |
| SDN flow 5-tuple information (target MAC address, target IP address, source MAC address, source IP address, DSCP) | Obtaining a tunnel ID | Marking an original message with the tunnel ID |
| Tunnel ID | Obtaining an output port and an output queue | Forwarding according to the output port and the output queue |

In the present embodiment, the 5-tuple information of the SDN flow includes a target MAC address, a target IP address, a source MAC address, a source IP address and a DSCP value.

The tunnel ID includes a DSCP value used to identify the priority levels corresponding to the SDN flow and dynamically allocate the ID number according to the 5-tuple information of the SDN flow. Specifically, the private 32-bit tunnel ID includes two parts. One part is the queue ID corresponding to the DSCP value of the flow (0-63, with 0 indicating the lowest priority level and 63 indicating the highest priority level) and indicates a hardware queue, i.e., queue ID=DSCP value=hardware queue. The ID higher than 24-bit is dynamically allocated according to the 5-tuple information of the flow (the target MAC address, target IP address, source MAC address, source IP address, DSCP value).

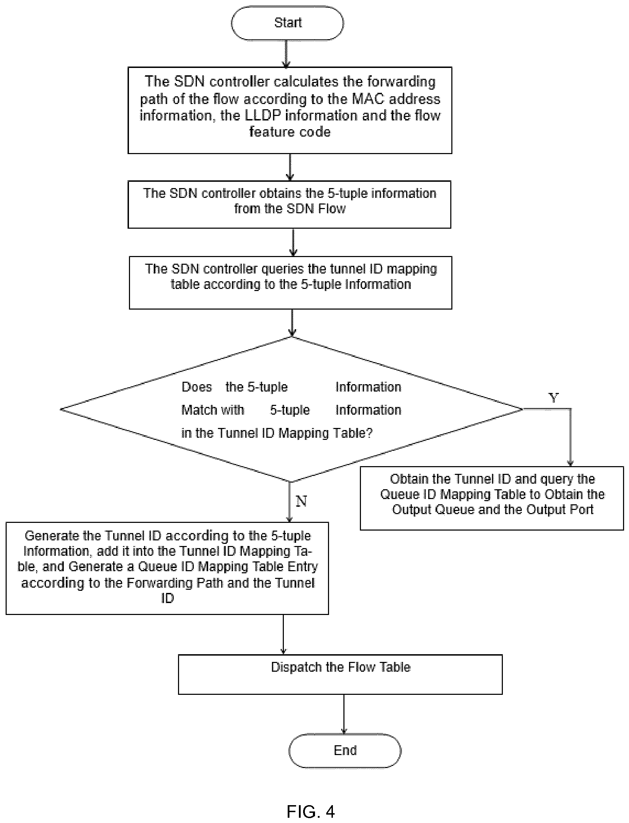

The process of the SDN controller is relatively complicated and the overall SDN-controlled process is shown in Fig.4. First of all, the SDN controller calculates the flow-forwarding path according to the MAC address information, LLDP information and the flow feature code; and then the SDN controller obtains the 5-tuple information from the SDN flow. The SDN controller queries the tunnel ID mapping table according to the 5-tuple information. If a match does exist, the SDN controller obtains the tunnel ID and further queries the queue ID mapping table to obtain the output queue and the output port. If no match does exist, the SDN controller generates the tunnel ID according to the 5-tuple information and adds it into the tunnel ID mapping table and then generates the queue ID mapping table according to the forwarding path and the tunnel ID. At last, the SDN controller dispatches the flow table to the SDN switches.

In the present embodiment, the SDN-based QoS-supported communication tunnel establishment method further includes: the SDN switch obtains the output queue and the output port according to the tunnel ID, specifically, the SDN switch determines whether the received SDN flow is in tunnel message, if so, matches the flow table according to the tunnel ID to obtain the output queue and the output port, and if not, matches the flow table according to the 5-tuple information and marks it with the tunnel ID to obtain the output queue and the output port.

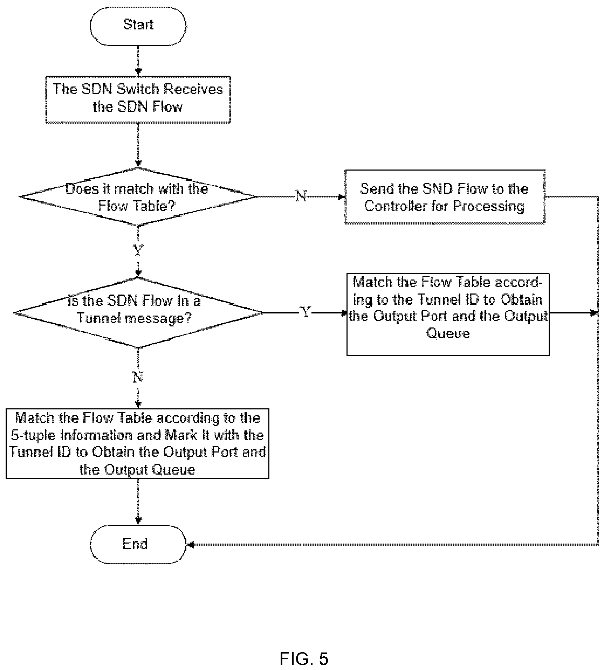

Specifically, a flowchart illustrating processing by an SDN switch is as shown in Fig. 5. When an SDN switch receives an SDN flow, match it with the flow table. If it is not matched, the SDN flow is sent to the SDN controller for processing. If it is matched, determine the format of the SDN flow. If it is in tunnel message, match the tunnel ID with the flow table to obtain the output port and the output queue. If it is not in tunnel message, match the 5-tuple information of the message with the flow table and mark it with a tunnel header to obtain the output port and output queue.

In the present embodiment, when the original message enters the border switch, mark it with a tunnel header, and forward it via matching the tunnel ID with the flow table in the interior switches. When the original message leaves the border switch, remove the tunnel header. The full format of the message is as shown in Table 2.

**Table 2**

| | | | |
|---|---|---|---|
| Ethernet Header | Tunnel Header | Orignal IP Header | Payload |

The format of the tunnel header is as shown in Table 3.

**Table 3**

| Flags | Tunnel ID |
|---|---|
| Tunnel ID | Reserved Field |

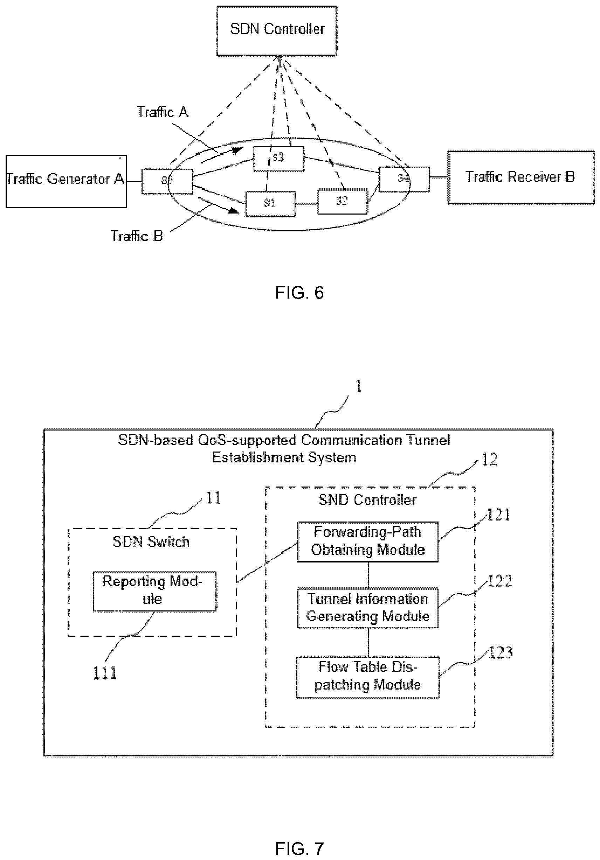

Test steps of the present invention are as follows:
A test environment as shown in Fig. 6 is established. A traffic generator A generates traffic A (DSCP=1) and a traffic receiver B receives traffic B (DSCP=63), wherein S0-S4 are the SDN switches. When the network congestion occurs, the traffic A cannot be forwarded, while the traffic B can be forwarded normally.

In order to achieve the above object, the present invention also provides an SDN-based QoS-supported communication tunnel establishment system used in a communication network including SDN switches and an SDN controller. As shown in Fig. 7, the SDN-based QoS-supported communication tunnel establishment system 1 includes: the SDN switches 11; and the SDN controller 12, the SDN switches 11 being grouped into border SDN switches and interior SDN switches. In the present embodiment, it is assumed that the control level of border switches and interior switches are all elevated to the SDN controller 12 and the border SDN switches and interior SDN switches only reserve the data and downgrade to forwarding nodes.

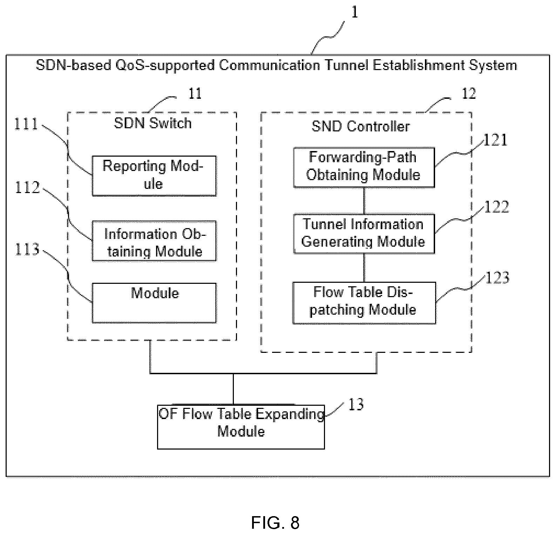

As shown in Fig. 8, the SDN switches 11 include: a reporting module 111, an information obtaining module 112 and a determining module 113. The SDN controller 12 includes a forwarding path obtaining module 121, a tunnel information generating module 122 and a flow table dispatching module 123.

The SDN-based QoS-supported communication tunnel establishment system 1 in the present embodiment is based on an SDN architecture, and the tunnel establishment is accomplished by the SDN controller with a fast convergence speed. As shown in Fig. 2, the SDN-based QoS-supported communication tunnel establishment method in the present embodiment establishes tunnels according to a DSCP field in an IP header of an SDN flow, specifies a priority queue and provides end-to-end QoS service. In Fig. 2, a source A transmits data and establishes a private tunnel with a priority level of 63, i.e., packet DSCP=63, and a private tunnel with a priority level of 1, i.e., packet DSCP=1, and a target B receives the data, wherein S0-S4 are the SDN switches 11 and the SDN controller 12 controls the forwarding of the data.

The reporting module 111 is used to report a target MAC address and an SDN flow mismatching the flow table to the SDN controller 12. That is, an SDN switch 11 reports the target address and the SDN flow mismatching the flow table to the SDN controller 12. Specifically, in the present embodiment, upon the SDN switch 11 adding or ageing a MAC address information, it is needed to be reported to the SDN controller 12 immediately. In addition, the SDN switch 11 sends the SDN flow mismatching the flow table to the SDN controller 12.

The forwarding-path obtaining module 121 is connected to the reporting module 111 and used to obtain a forwarding path of the SDN flow according to the MAC address, the flow feature code of the SDN flow and the link layer discovery protocol. That is, the SDN controller 12 calculates the forwarding path according to the MAC address information, the LLDP (Link Layer Discovery Protocol) information and the flow feature code.

The tunnel information generating module 122 is connected to the forwarding-path obtaining module 121 and used to generate a tunnel ID mapping table indicative of a mapping of the 5-tuple information to the tunnel ID and a queue ID mapping table indicative of a mapping of the tunnel ID to an output queue and an output port according to the forwarding path of the SDN flow and the 5-tuple information of the SDN flow, and generates a corresponding flow table, wherein the tunnel ID specifies a priority queue.

The definition of the private 32-bit tunnel ID implicitly specifies the priority queue. The private tunnel ID mapping table indicates a mapping of the 5-tuple information to the tunnel ID. The private queue ID mapping table indicates a mapping of the tunnel ID to the output queue and the output port. The border switch marks the tunnel header according to the private tunnel ID mapping table and queries the private queue ID mapping table to obtain the output queue and the output port for forwarding. The interior switches only query the private queue ID mapping table to obtain the output queue and the output port for forwarding.

The flow table dispatching module 123 is connected to the tunnel information generating module 122 and used to dispatch the flow table to the SDN switch 11 so that the SDN flow is forwarded according to the flow table.

The SDN-based QoS-supported communication tunnel establishment system 1 further includes an OF flow table expanding module 13 to expand an SDN flow 5-tuple information field and a tunnel ID field used to query tunnel ID mapping table and the queue ID mapping table in an OF flow table. The expansion of the OF flow table is defined as shown above in Table 1.

The 5-tuple information of the SDN flow includes a target MAC address, a target IP address, a source MAC address, a source IP address and a DSCP value.

The tunnel ID includes a DSCP value used to identify the priority levels corresponding to the SDN flow and dynamically allocate the ID number according to the 5-tuple information of the SDN flow. Specifically, the private 32-bit tunnel ID includes two parts. One part is the queue ID corresponding to the DSCP value of the flow (0-63, with 0 indicating the lowest priority level and 63 indicating the highest priority level) and indicates a hardware queue, i.e., queue ID=DSCP value=hardware queue. The ID higher than 24-bit is dynamically allocated according to the 5-tuple information of the flow (the target MAC address, target IP address, source MAC address, source IP address, DSCP value).

The information obtaining module 112 is connected to the flow table dispatching module 123 and used to obtain the output queue and the output port according to the tunnel ID. The determining module 113 is connected to the flow table dispatching module 123 and used to determine whether the received SDN flow is in tunnel message. if so, the information obtaining module 112 matches the flow table according to the tunnel ID to obtain the output queue and the output port; and if not, the information obtaining module matches the flow table according to the 5-tuple information and marks it with the tunnel ID to obtain the output queue and the output port.

The process of the SDN controller 12 is relatively complicated and a flowchart illustrating the overall SDN-control processing is as shown in Fig. 4. First of all, the SDN controller 12 calculates the flow-forwarding path according to the MAC address information, LLDP information and the flow feature code; and then the SDN controller 12 obtains the 5-tuple information from the SDN flow. The SDN controller 12 queries the tunnel ID mapping table according to the 5-tuple information. If a match does exist, the SDN controller 12 obtains the tunnel ID and further queries the queue ID mapping table to obtain the output queue and the output port. If no match does exist, the SDN controller generates the tunnel ID according to the 5-tuple information and adds it into the tunnel ID mapping table and then generates the queue ID mapping table according to the forwarding path and the tunnel ID. At last, the SDN controller dispatches the flow table to the SDN switches 11.

Specifically, a flowchart illustrating processing by the SDN switch 11 is as shown in Fig. 5. When the SDN switch 11 receives an SDN flow, match it with the flow table. If it is not matched, the SDN flow is sent to the SDN controller 12 for processing. If it is matched, determine the format of the SDN flow. If it is in tunnel message, match the tunnel ID with the flow table to obtain the output port and the output queue. If it is not in tunnel message, match the 5-tuple information of the message with the flow table and mark it with a tunnel header to obtain the output port and output queue. In the present embodiment, when the original message enters the border switch, mark it with a tunnel header, and forward it via matching the tunnel ID with the flow table in the interior switches. When the original message leaves the border switch, remove the tunnel header. The full format of the message is as shown in Table 2. The format of the tunnel header is as shown above in Table 3.

Test steps of the present invention are as follows:
A test environment as shown in Fig. 6 is established. A traffic generator A generates traffic A (DSCP=1) and a traffic receiver B receives traffic B (DSCP=63), wherein S0-S4 are the SDN switches. When the network congestion occurs, the traffic A cannot be forwarded, while the traffic B can be forwarded normally.

In summary, the present invention is based on an SDN architecture, and the communication tunnel establishment is accomplished by the SDN controller. In addition, based on a DSCP field in an IP header of the SDN flow, the communication tunnel is established, the priority queue is specified, and end-to-end QoS service is provided. The present invention possesses high versatility of use and high utility. Therefore, the present invention has overcome the various drawbacks of the prior art and has a high value in industrial use.

The embodiment presented above merely explains the principles and effects of the present invention exemplarily and is not intended to limit the invention. Any person skilled in the art can make modifications or changes to the above embodiment without departing from the spirit and scope of the invention. Accordingly, all equivalent modifications or changes made by those of ordinary skill in the art without departing from the spirit and technical concept disclosed herein are intended to be embraced by the claims of the present invention.

## Claims

1. An SDN-based QoS-supported communication tunnel establishment method used in a communication network comprising SDN switches and an SDN controller, comprising:
reporting, by an SDN switch, a designated MAC address and an SDN flow mismatching a flow table to an SDN controller;
obtaining, by the SDN controller, a forwarding path of the SDN flow according to the MAC address, a flow feature code of the SDN flow and a link layer discovery protocol;
generating, by the SDN controller, a tunnel ID mapping table indicating a mapping of the 5-tuple information to a tunnel ID and a queue ID mapping table indicating a mapping of the tunnel ID to an output queue and an output port, and a corresponding flow table according to the forwarding path and 5-tuple information of the SDN flow, wherein a priority queue is specified in the tunnel ID;
dispatching, by the SDN controller, the flow table to the SDN switch so that the SDN flow is forwarded according to the flow table.

2. The SDN-based QoS-supported communication tunnel establishment method according to claim 1, further comprising: expanding an SDN flow 5-tuple information field and a tunnel ID field used to query tunnel ID mapping table and the queue ID mapping table in an OF flow table.

3. The SDN-based QoS-supported communication tunnel establishment method according to claim 1 or 2, wherein the 5-tuple information of the SDN flow comprises: a target MAC address, a target IP address, a source MAC address, a source IP address and a DSCP value.

4. The SDN-based QoS-supported communication tunnel establishment method according to claim 1 or 2, wherein the tunnel ID comprises:
a DSCP value, configured to identify the priority levels corresponding to the SDN flow;
an ID number, dynamically assigned according to the 5-tuple information of the SDN flow.

5. The SDN-based QoS-supported communication tunnel establishment method according to claim 1, comprising:
obtaining, by the SDN switch, the output queue and the output port according to the tunnel ID, more precisely, determining, by the SDN switch, whether the received SDN flow is in tunnel message format, if so, matching the flow table according to the tunnel ID to obtain the output queue and the output port; if not, matching the flow table according to the 5-tuple information and marking with the tunnel ID to obtain the output queue and the output port.

6. An SDN-based QoS-supported communication tunnel establishment system used in a communication network comprising SDN switches and an SDN controller, comprising:
the SDN switches, comprising:
a reporting module, configured to report a designated MAC address and an SDN flow mismatching a flow table to an SDN controller;
the SDN controller, connected to the SDN switches, comprising:
a forwarding-path obtaining module, connected to the reporting module, configured to obtain a forwarding path of the SDN flow according to the MAC address, a flow feature code of the SDN flow and a link layer discovery protocol;
a tunnel information generating module, connected to the forwarding-path obtaining module, configured to generate a tunnel ID mapping table indicating a mapping of the 5-tuple information to a tunnel ID and a queue ID mapping table indicating a mapping of the tunnel ID to an output queue and an output port, and a corresponding flow table according to the forwarding path of the SDN flow and 5-tuple information of the SDN flow, wherein a priority queue is specified in the tunnel ID;
a flow table dispatching module, connected to the tunnel information generating module, configured to dispatch the flow table to the SDN switches, so that the SDN flow is forwarded according to the flow table.

7. The SDN-based QoS-supported communication tunnel establishment system according to claim 6, further comprising:
an OF flow table expanding module, configured to expand an SDN flow 5-tuple information field and a tunnel ID field used to query tunnel ID mapping table and the queue ID mapping table in an OF flow table.

8. The SDN-based QoS-supported communication tunnel establishment system according to claim 6 or 7, wherein the 5-tuple information of the SDN flow comprises a target MAC address, a target IP address, a source MAC address, a source IP address and a DSCP value.

9. The SDN-based QoS-supported communication tunnel establishment system according to claim 6 or 7, wherein the tunnel ID comprises: a DSCP value, configured to identify the priority levels corresponding to the SDN flow; an ID number, dynamically assigned according to the 5-tuple information of the SDN flow.

10. The SDN-based QoS-supported communication tunnel establishment system according to claim 6, wherein the SDN switches further comprise:
an information obtaining module, connected to the flow table dispatching module, configured to obtain the output queue and the output port according to the tunnel ID;
a determining module, connected to the flow table dispatching module and the information obtaining module, configured to determine whether the received SDN flow is in tunnel message, if so, the information obtaining module matches the flow table according to the tunnel ID to obtain the output queue and the output port; and
if not, the information obtaining module matches the flow table according to the 5-tuple information and marks it with the tunnel ID to obtain the output queue and the output port.
